# EUROPEAN PATENT SPECIFICATION

(11) **EP 3 186 957 B1**
(45) Date of publication and mention of the grant of the patent: **31.07.2019**
(21) Application number: 15835156.9
(22) Date of filing: 20.08.2015
(51) Int. Cl.: H04B 7/145, H04N 7/14, H04N 7/15, H04M 3/56, H04L 29/06

(54) **TRANSMISSION TERMINAL, TRANSMISSION METHOD, AND NON-TRANSITORY STORAGE MEDIUM STORING PROGRAM**
ÜBERTRAGUNGSENDGERÄT, ÜBERTRAGUNGSVERFAHREN UND NICHTTRANSITORISCHES SPEICHERMEDIUM MIT DARAUF GESPEICHERTEM PROGRAMM
TERMINAL DE TRANSMISSION, PROCÉDÉ DE TRANSMISSION ET PROGRAMME DE STOCKAGE UTILISANT UN SUPPORT DE STOCKAGE NON TRANSITOIRE

(30) Priority: 29.08.2014 JP 2014174766
(43) Date of publication of application: 05.07.2017
(73) Proprietor: Ricoh Company, Ltd., Tokyo 143-8555 (JP)
(72) Inventor: KATO, Yoshinaga, Tokyo 143-8555 (JP)
(74) Representative: SSM Sandmair
(86) International application number: PCT/JP2015/004175
(87) International publication number: WO 2016/031200

(56) References cited:
- EP-A1- 2 642 753
- EP-A2- 1 841 226
- US-A1- 2013 242 030
- US-A1- 2014 077 937

## Description

### Technical Field

The present invention relates to a transmission terminal, a transmission method, and a non-transitory storage medium storing a program. Specifically, the present invention relates to a transmission terminal, a transmission method, and a non-transitory storage medium storing a program for executing communication with a transmission terminal that is a destination of the communication by communicating with a relay device for relaying image data that is communicated among a plurality of the transmission terminals, and communicating with a transmission management system for managing the transmission terminals.

### Background Art

In accordance with an increase in demand on cutting down on business trip expenses and time to be spent on a business trip, video conference systems for executing video conferences (which are also called "TV conferences") with remote locations are becoming common. In such a video conference system, a conversation (a telephone call) is executed by directly communicating image data and audio data among a plurality of video conference terminals.

Recently, a video conference system is becoming common such that a relay device is interposed among a plurality of video conference terminals, and that the relay device relays image data and audio data. For such a video conference system in which a relay device is interposed, a video encoding technique is adopted with which communication failure can be minimized, even if a temporary communication network failure occurs or processing capability of a video conference terminal is insufficient. For such a video encoding technique, a standard is used that is called "H.264/SVC (Scalable Video Coding), (cf. Patent Document 1)."

However, under an environment where transmission capacity is reduced due to congestion in a communication network or the like, a delay may occur for receiving image data at a video conference terminal that is at a receiving side. As a measure for such a case, a method has been known such that communication is maintained by stopping transmission and reception of image data that shows a subject among the video conference terminals, and by only communicating audio data (cf. Patent Document 2). In this manner, at a video conference terminal that is a receiving side for receiving image data (which is at the own side here), an image can be prevented from being displayed such that it shows a subject at a destination side, but it may give an uncomfortable impression due to a large delay.

EP 2 642 753 and EP 1841226 disclose systems of the prior art.

### Summary of Invention

### Technical Problem

However, in a situation in which the image showing the subject at the destination side is not displayed at the own side, upon stopping of the conversation at the destination side, neither image not sound is output at the own side. Consequently, a user (own self) may not understand whether the communication partner terminates the telephone call or the communication partner does not terminate the telephone call but is temporarily holding the telephone call because the image at the destination side (e.g., appearance of the communication partner) becomes invisible.

### Solution to Problem

The invention is defined by a transmission terminal according to claim 1, a transmission method according to claim 5 and a non-transitory storage medium storing a program to be executed by a computer of a transmission terminal according to claim 6. Further embodiments are defined by the dependent claims.

### Advantageous Effects of Invention

According to an embodiment, additional display data, as a destination name of another transmission terminal at a destination side or a predetermined message, is attached to data of an image that is transmitted from the other transmission terminal at the destination side and that does not show a subject at a destination side, and the data of the image to which the additional display data is attached is displayed. Consequently, even if an image at the destination side (e.g., appearance of the communication partner) becomes invisible, a user (own self) can understand whether the communication partner terminates the telephone call or the communication partner does not terminate the telephone call but is temporarily holding the telephone call.

### Brief Description of Drawings

FIG. 1 is a schematic diagram showing a portion that is related to communication of a video conference in a transmission system according to an embodiment;
FIG. 2 is a diagram showing an example of an external view of a transmission terminal according to the embodiment;
FIG. 3 is a hardware configuration diagram of the transmission terminal according to the embodiment;
FIG. 4 is a diagram showing an example of a hardware configuration of a transmission management system according to the embodiment;
FIG. 5 is a diagram showing an example of an overall configuration of the transmission system according to the embodiment;
FIG. 6 is a diagram showing an example of functional blocks of the transmission system according to the embodiment;
FIG. 7A is a conceptual diagram showing an example of an arrangement management table;
FIG. 7B is a conceptual diagram showing an example of an arrangement area;
FIG. 8A is a conceptual diagram showing an example of the arrangement management table;
FIG. 8B is a conceptual diagram showing an example of an arrangement area;
FIG. 9 is a conceptual diagram showing an example of an authentication management table;
FIG. 10 is a conceptual diagram showing an example of a terminal management table;
FIG. 11 is a conceptual diagram showing an example of a destination list management table;
FIG. 12 is a sequence diagram showing an example of a process for the transmission terminal to log in;
FIG. 13 is a sequence diagram showing an example of a process for displaying additional display data;
FIG. 14 is a flowchart showing an example of a process for reading out the additional display data; and
FIG. 15A is a diagram showing an example of a screen of the transmission terminal.
FIG. 15B is a diagram showing an example of a screen of the transmission terminal.
FIG. 15C is a diagram showing an example of a screen of the transmission terminal.

### Description of Embodiments

An embodiment of the present invention is explained below by using the accompanying drawings.

### <<Overall configuration for video conferencing>>

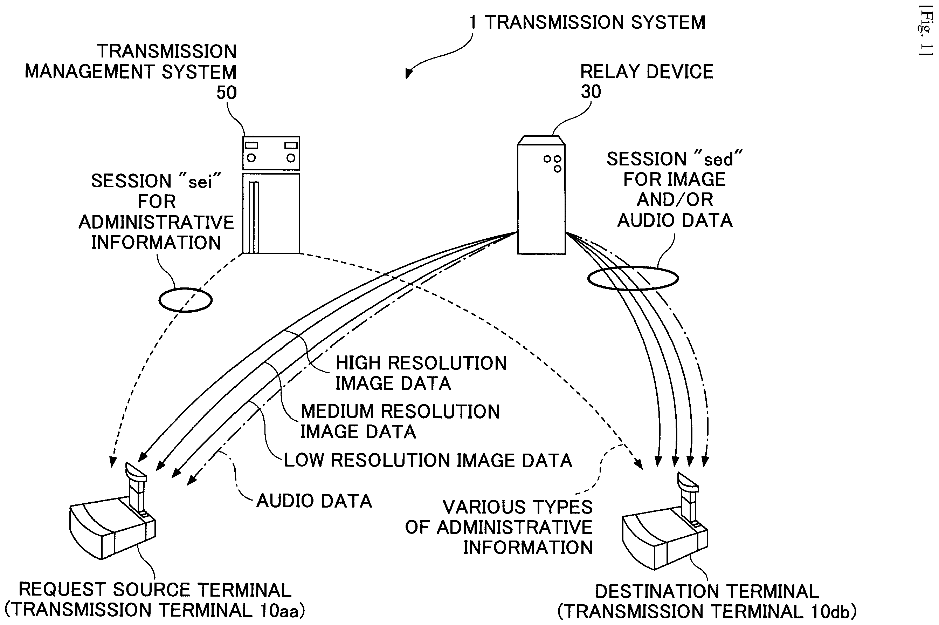

First, a transmission system 1 for executing a video conference among a plurality of transmission terminals (10aa, 10db, etc.) is explained by using FIG. 1. FIG. 1 is a schematic diagram showing a portion that is related to communication of a video conference in the transmission system 1 according to the embodiment.

The transmission system 1 is formed of the transmission terminals (10aa, 10db, etc.); a relay device 30; and a transmission management system 50. Note that, hereinafter, among the transmission terminals (10aa, 10db, etc.), any transmission terminal is represented by "transmission terminal 10."

The transmission terminal 10 can transmit and receive image data and audio data, as an example of content data. Note that an image of the image data may be a video image or a still image, and the image of the image data can be both a video image and a still image.

Further, a transmission terminal, as a request source, for requesting to start a video conference is represented as a "request source terminal," and a transmission terminal, as a destination (a relay destination) that is a request destination, is represented as a "destination terminal." In FIG. 1, the transmission terminal 10aa is shown as a request source terminal, and the transmission terminal 10db is shown as a destination terminal. However, for a case in which the transmission terminal 10db requests to start a video conference, the transmission terminal 10db is the request source terminal, and the transmission terminal 10aa is the destination terminal. Note that each transmission terminal 10 can be used not only for a telephone call among a plurality of offices or a telephone call among different rooms within the same office, but also for a telephone call within the same room or a telephone call between indoor and outdoor, or entirely outdoor. For a case in which each transmission terminal 10 is used outdoor, wireless communication can be executed, by using a cellular telephone network, for example.

The relay device 30 can execute a process for relaying content data among the transmission terminals 10. The transmission management system 50 can centrally execute management of authentication of log-in from the transmission terminal 10, management of a communication state of the transmission terminal 10, management of a destination list, management of a communication state of the relay device 30, and so forth.

Further, in the transmission system 1, a session "sei" is to be established between a request source terminal and a destination terminal through the transmission management system 50. The session "sei" is a session for administrative information that is for communicating various types of administrative information through the transmission management system 50. Additionally, between the request source terminal and the destination terminal, four sessions are to be established through the relay device 30. The four sessions are for communicating high resolution image data, medium resolution image data, low resolution image data, and audio data, respectively. In FIG. 1, these four sessions are collectively shown as a session "sed" for image and/ or audio data. Note that, the session "sed" for image and/or audio data may not be four sessions. For example, the session "sed" for image and/or audio data may be a set of less than four sessions or a set of more than four sessions.

Here, there is explained a resolution of an image of image data that is described in the embodiment. For example, the low resolution image data may be formed of 160 pixels in the horizontal direction and 120 pixels in the vertical direction, and the low resolution image data is to be a base image. The medium resolution image data may be formed of 320 pixels in the horizontal direction and 240 pixels in the vertical direction. The high resolution image data may be formed of 640 pixels in the horizontal direction and 480 pixels in the vertical direction, for example. Among these, for a case of communication through a narrow-band communication path, the low resolution image data is to be relayed that is formed of only the low resolution image data that is to be the base image. For a case in which the bandwidth is relatively broad, the low resolution image data that is to be the base image and the medium resolution image data that is formed of medium resolution image data are to be relayed. For a case in which the bandwidth is very broad, the low resolution image data that is to be the base image, the medium resolution image data, and the high resolution image data that is formed of high resolution image data are to be relayed. For the audio data, an amount of the data is small relative to that of the image data. Thus, the audio data can be relayed even if a communication path is a narrow-band communication path.

Note that the transmission system 1 includes a data provisioning system that is for unidirectionally transmitting content data from one transmission terminal 10 to another transmission terminal 10 through the transmission management system 50; and a communication system that is for mutually communicating information and feelings among a plurality of the transmission terminals 10 through the transmission management system 50. The communication system is a system for mutually communicating information and feelings among a plurality of communication terminals (which correspond to the transmission terminals 10) through a communication management system (which corresponds to the transmission management system 50). Examples of the communication system include a video conference system, a video telephone system, and so forth.

In the embodiment, the transmission system 1, the transmission management system 50, and the transmission terminal 10 are explained while assuming a video conference system as an example of a communication system, a video conference management system as an example of a communication management system, and a video conference terminal as an example of a communication terminal. Namely, the transmission terminal 10 and the transmission management system 50 according to the embodiment can be applied not only to a video conference system, but also to a communication system or a transmission system.

### <<Hardware configuration according to the embodiment>>

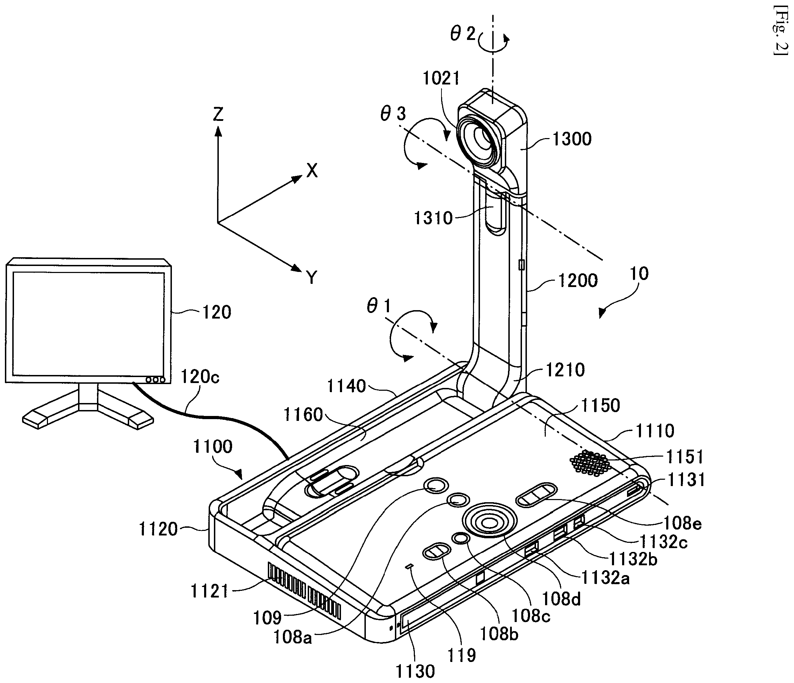

Next, a hardware configuration according to the embodiment is explained. FIG. 2 is an external view of the transmission terminal 10 according to the embodiment. As shown in FIG. 2, the transmission terminal 10 includes a housing 1100; an arm 1200; and a camera housing 1300. Among these, in a front wall surface 1110 of the housing 1100, an inlet surface (not shown) is provided that is formed of a plurality of inlet ports, and in a rear wall surface 1120 of the housing 1100, an air outlet surface 1121 is provided in which a plurality of air outlets is formed. With such a configuration, air at the rear side of the transmission terminal 10 can be taken in through the inlet surface (not shown), and the air can be exhausted toward the front side of the transmission terminal 10 through the air outlet surface 1121 by driving a cooling fan that is installed inside the housing 1100. A sound collecting opening 1131 is formed in a right wall surface 1130 of the housing 1100, and by a built-in microphone 114 that is described below, sounds such as a tone, noise, a pulse, and so forth can be collected.

An operations panel 1150 is formed on a side of the right wall surface 1130 of the housing 1100. In the operations panel 1150, there are provided a plurality of operation buttons (108a - 108e) that is described below; a power supply switch 109 that is described below; and an alarm lamp 119 that is described below. At the same time, a sound emitting surface 1151 is formed in the operations panel 1150. The sound emitting surface 1151 is formed of a plurality of sound emitting holes for transmitting output sound from a built-in speaker 115 that is described below. Further, at a side of a left wall surface 1140 of the housing 1100, an accommodating portion 1160 is formed as a concave portion that is for accommodating the arm 1200 and the camera housing 1300. On the right wall surface 1130 of the housing 1100, a plurality of connection ports (1132a - 1132c) is provided. Each of the connection ports (1132a - 1132c) is for electrically connecting a cable to an external device connection I/F 118 that is described below. On the left wall surface 1140 of the housing 1100, a connection port (not shown) is provided that is for electrically connecting a cable 120c for a display 120 to the external device connection I/F 118.

Note that, in the following, explanations are given by using the "operation button 108" for indicating an operation button among the operation buttons (108a - 108e), and by using the "connection port 1132" for indicating a connection port among the connection ports (1132a - 1132c).

The arm 1200 is attached to the housing 1100 through a torque hinge 1210. The arm 1200 is formed so that it can be pivoted with respect to the housing 1100 in the vertical direction in a range of 135 degrees in the tilt angle θ1. FIG. 2 shows a state in which the tilt angle θ1 is 90 degrees. A built-in camera 112, which is described below, is provided in the camera housing 1300, so that photographs (images) of a user, a book, a room, and so forth can be taken. Further, a torque hinge 1310 is formed in the camera housing 1300. The camera housing 1300 is attached to the arm 1200 through the torque hinge 1310. The camera housing 1300 is formed so that it can be pivoted with respect to the arm 1200 in the horizontal direction in a range of ± 180 degrees in a pan angle θ2, and it can be pivoted in the vertical direction in a range of ± 45 degrees in a tilt angle θ3, while assuming that the state that is shown in FIG. 2 is the state of 0 degrees.

Note that the external view of FIG. 2 is an example, and the external view of the transmission terminal 10 is not limited to the external view that is shown in FIG. 2. The camera and the microphone may not be the built-in camera and the built-in microphone, respectively. The camera and the microphone can be an external camera and an external microphone, respectively. Further, since the external view of the transmission management system 50 is the same as that of a general-purpose server computer, the explanation of the external view of the transmission management system 50 is omitted.

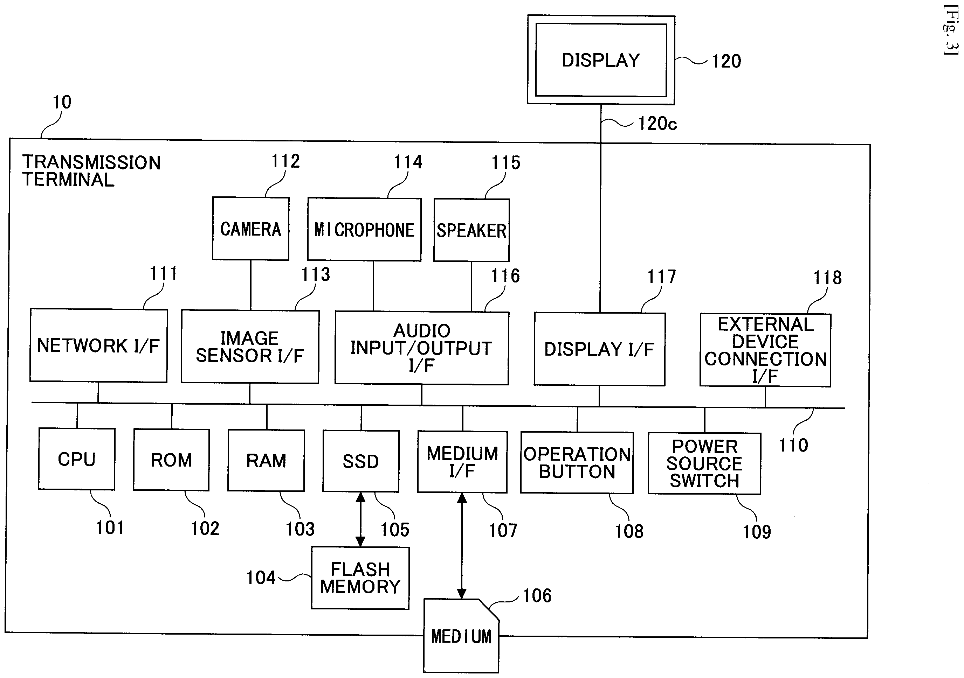

FIG. 3 is a hardware configuration diagram of the transmission terminal 10 according to the embodiment of the present invention. As shown in FIG. 3, the transmission terminal 10 according to the embodiment includes a central processing unit (CPU) 101 for controlling overall operations of the transmission terminal 10; a read-only memory (ROM) 102 that stores a program that is used for driving the CPU 101, such as an initial program loader (IPL); a random access memory (RAM) 103 that is to be used as a work area of the CPU 101; a flash memory 104 for storing various types of data, such as a transmission program, image data, and audio data; a solid state drive 105 (SSD) for controlling reading out various types of data from the flash memory 104, and for controlling writing various types of data in the flash memory 104 in accordance with control of the CPU 101; a medium interface (I/F) 107 for controlling reading out data from a recording medium 106, such as a flash memory, and writing (storing) data in the recording medium 106; an operation button 108 that is to be operated, for example, for selecting a destination of the transmission terminal 10; a power source switch 109 for switching between ON and OFF of a power source of the transmission terminal 10; and a network interface (I/F) 111 for transmitting data by using a communication network 2. Note that a hard disk drive (HDD) can be used, instead of the SSD.

Additionally, the transmission terminal 10 includes the built-in camera 112 for taking a photograph of a subject and for obtaining image data in accordance with control of the CPU 101; an image sensor interface (I/F) 113 for controlling driving of the built-in camera 112; the built-in microphone 114 for inputting audio; the built-in speaker 115 for outputting audio; an audio input/output interface (I/F) 116 for processing input and output of audio signals between the built-in-microphone 114 and the built-in speaker 115 in accordance with control of the CPU 101; a display interface (I/F) 117 for transmitting image data to an external display 120 in accordance with control of the CPU 101; the external device connection I/F 118 for connecting various types of external devices; and a bus line 110, such as an address bus and a data bus for electrically connecting the above-described components as shown in FIG. 3.

The display 120 is an example of a display unit that is formed of a liquid crystal display or an organic electro-luminescence display for displaying an image of a subject, an icon for operation, and so forth. Additionally, the display 120 can be connected to the display I/F 117 by the cable 120c. The cable 120c may be a cable for analog RGB (VGA) signals, a cable for a component video, or a cable for high-definition multimedia interface (HDMI) signals and/or digital video interactive (DVI) signals.

The camera 112 includes a lens; and a solid-state image sensor for converting an image (a picture) of a subject into electric image data by converting light into electric charges. Here, a complementary metal oxide semiconductor (CMOS) and/or a charge coupled device (CCD) can be used as the solid state image sensor.

An external device, such as an external camera, an external microphone, or an external speaker, can be connected to the external device I/F 118 by a Universal Serial Bus (USB) cable, for example. In response to detecting that the external camera is connected, the external camera is preferentially driven over the built-in camera 112 in accordance with control of the CPU 101. Similarly, upon detecting that the external microphone is connected, the external microphone is preferentially driven over the built-in microphone 114 in accordance with control of the CPU 101. Upon detecting that the external speaker is connected, the external speaker is preferentially driven over the built-in speaker 115 in accordance with control of the CPU 101.

Note that the recording medium 106 has a configuration such that it can be detachably attached to the transmission terminal 10. Additionally or alternatively, instead of the flash memory 104, a non-volatile memory can be used, such as an electrically erasable and programmable ROM (EEPROM), provided that data can be read out from and written in the non-volatile memory in accordance with control of the CPU 101.

Further, the above-described transmission program may be stored in a computer readable recording medium, such as the above-described recording medium 106, as a file in an installable format or in an executable format, and the above-described transmission program may be distributed by distributing the recording medium. Additionally or alternatively, the above-described transmission program may be stored in the ROM 102, instead of the flash memory 104.

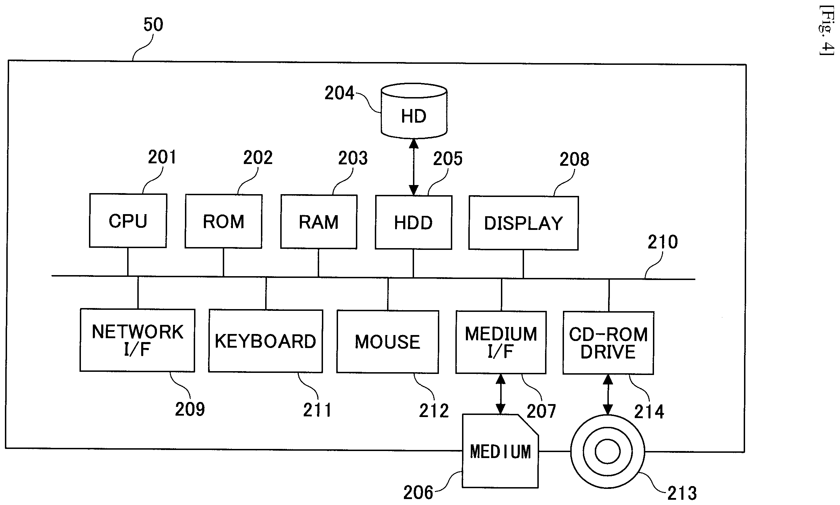

FIG. 4 is a hardware configuration diagram of the transmission management system 50 according to the embodiment of the present invention.

The transmission management system 50 includes a CPU 201 for controlling overall operations of the transmission management system 50; a ROM 202 that stores a program that is used for driving the CPU 201, such as an IPL; a RAM 203 that is to be used as a work area of the CPU 201; a hard disk (HD) 204 for storing various types of data, such as a transmission program; a hard disk drive 205 (HDD) for controlling reading out various types of data from the HD 204, and for controlling writing various types of data in the HD 204 in accordance with control of the CPU 201; a medium I/F 207 for controlling reading out data from a recording medium 206, such as a flash memory, and writing (storing) data in the recording medium 206; a display 208 for displaying various types of information, such as a cursor, a menu, a window, a character, and/or an image; a network I/F 209 for transmitting data by using the communication network 2; a keyboard 211 that includes a plurality of keys for inputting a character, a numerical value, and/or various types of instructions; a mouse 212 for selecting and executing various types of instructions, for selecting an object to be processed, and/or for moving a cursor, for example; a CD-ROM drive 214 for controlling reading out various types of data from a Compact Disc Read Only Memory (CD-ROM) 213, as an example of a detachable recording medium, and for controlling writing various types of data in the CD-ROM 213; and a bus line 210, such as an address bus and/or a data bus, for electrically connecting the above-described components as shown in FIG. 4.

Note that the above-described transmission program may be stored in a computer readable recording medium, such as the above-described recording medium 206 or the CD-ROM 213, as a file in an installable format or in an executable format, and the above-described transmission program may be distributed by distributing the recording medium. Additionally or alternatively, the above-described transmission program may be stored in the ROM 202, instead of the HD 204.

Note that, the above-described transmission program may be stored in a computer readable recording medium, such as a Compact Disc Recordable (CD-R), a Digital Versatile Disk (DVD), or a Blue-Ray disc (BD), as another example of the above-described detachable recording medium, and the above-described transmission program may be distributed by distributing the computer readable recording medium.

Further, since a hardware configuration of the relay device 30 that is shown in FIG. 1 is the same as the hardware configuration of the transmission management system 50, the explanation of the hardware configuration of the relay device 30 is omitted. However, for the case of the relay device 30, a relay program is stored in the HD 204.

### <<Overall configuration of the transmission system>>

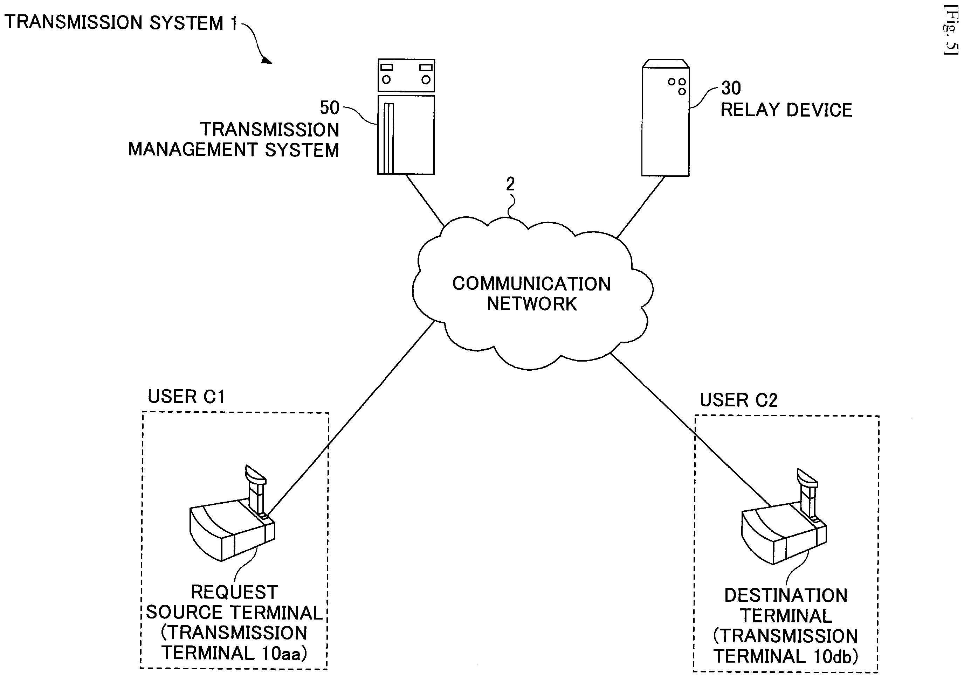

Subsequently, an overall configuration of the transmission system 1 is explained by referring to FIG. 5. FIG. 5 is a overall configuration diagram of the transmission system 1 according to the embodiment of the present invention.

In FIG. 5, the request source terminal (the transmission terminal 10aa), the destination terminal (the transmission terminal 10db), the relay device 30, and the transmission management system 50 are connected to the communication network 2 that may include the Internet. The communication through the communication network 2 may include wireless communication. The transmission terminal 10aa is used by a user C1, and the transmission terminal 10db is used by a user C2. The transmission management system 50 can provide various types of services to the transmission terminals 10.

### <<Functional configuration of the embodiment>>

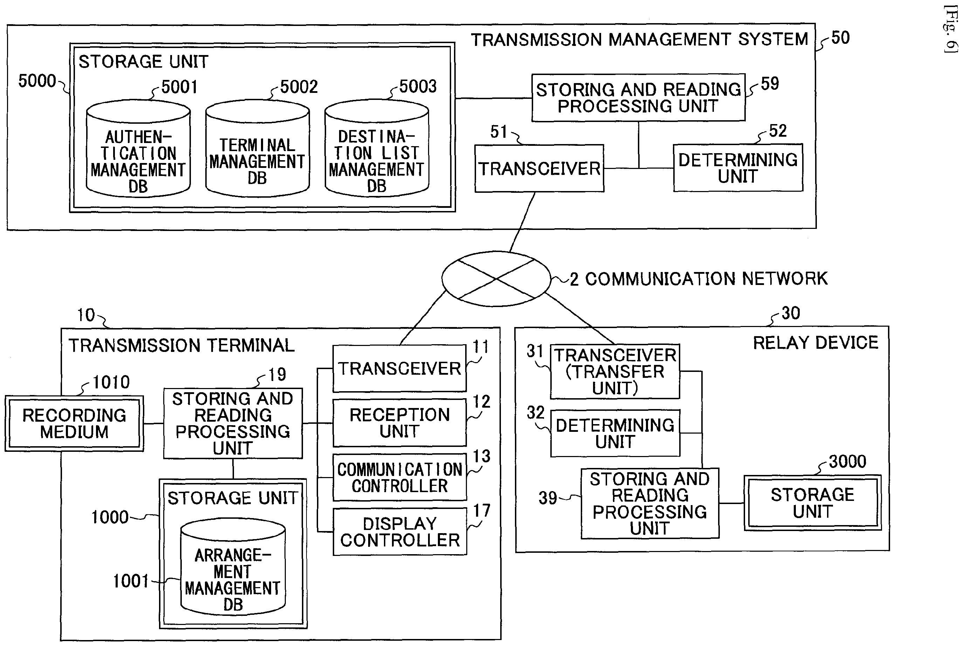

Next, a functional configuration of the embodiment is explained by referring to FIGS. 3, 4, and 6. FIG. 6 is a diagram showing functional blocks of the transmission system 1 according to the embodiment.

### <Functional configuration of the transmission terminal 10>

The transmission terminal 10 includes a transceiver 11; a reception unit 12; a communication controller 13; a display controller 17; and a storing and reading processing unit 19. These units are functions or functional units that are implemented by operating some components that are shown in FIG. 3 in response to one or more instructions from the CPU 101 that are in accordance with the transmission program that is from the flash memory 104 and that is loaded on the RAM 103. Further, the transmission terminal 10 includes a storage unit 1000 that is formed of the RAM 103 that is shown in FIG. 3 and the flash memory 104 that is shown in FIG. 3. Further, a recording medium 1010 that is formed of the recording medium 106 that is shown in FIG. 3 is inserted into the transmission terminal 10. The storing and reading processing unit 19 can read out various types of data from the recording medium 1010, and can write various types of data in the recording medium 1010.

### (Arrangement management table)

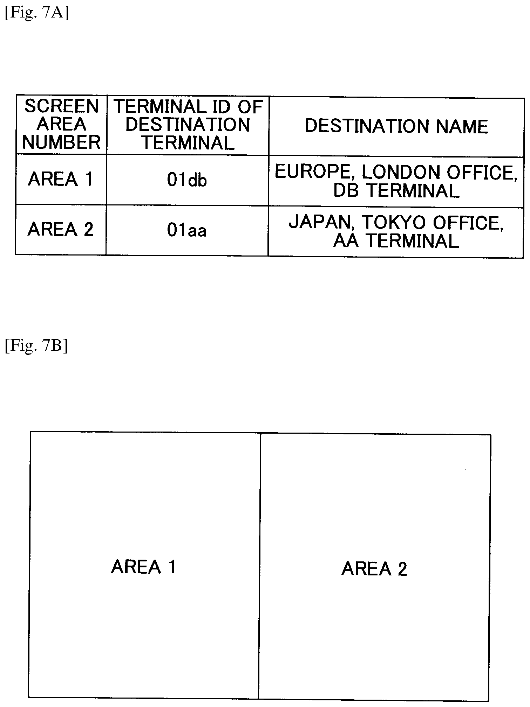

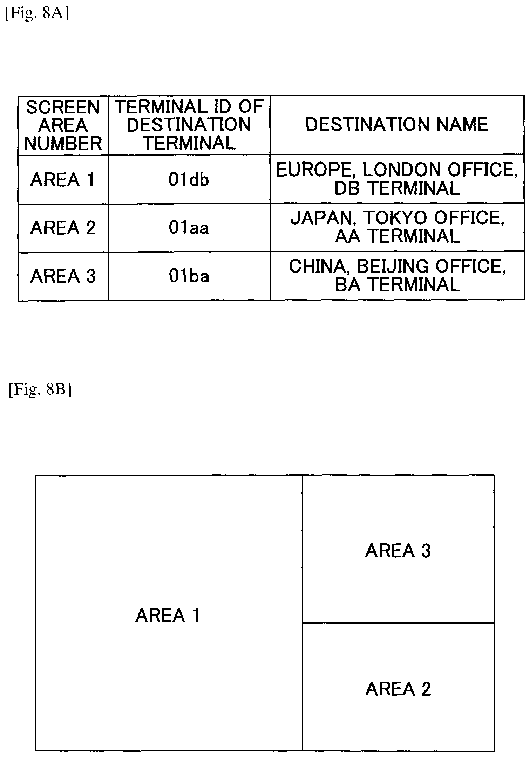

FIG. 7A is a conceptual diagram showing an arrangement management table. FIG. 7B is a conceptual diagram showing an arrangement area. Similarly, FIG. 8A is a conceptual diagram showing an arrangement table, and FIG. 8B is a conceptual diagram showing an arrangement area.

In the storage unit 1000, an arrangement management data base (DB) 1001 (cf. FIG. 6) is formed by an arrangement management table such as shown in FIG. 7A. The arrangement management table is for associating and managing a screen area number for identifying an area in a screen that is displayed on the display 120; a terminal ID of a destination terminal; and a destination name. For example, since the arrangement table that is shown in FIG. 7A manages a state in which the screen is divided into two pieces, two areas (area 1, and area 2) are to be displayed on the display 120 as shown in FIG. 7B. In the area 1 of FIG. 7B, the destination name indicating "Europe, London office, DB terminal" is displayed. In the area 2 of FIG. 7B, the destination name indicating "Japan, Tokyo office, AA terminal" is displayed.

Then, upon the arrangement of the screen area being changed by a user, the arrangement management table is dynamically changed, as shown in FIG. 8A, for example. In FIG. 8A, the screen is divided in three pieces. In accordance with this, the three areas (area 1, area 2, and area 3) are to be displayed, as shown in FIG. 8B.

### (Functional arrangements of the transmission terminal 10)

Next, the functional configurations of the transmission terminal 10 are explained in detail by referring to FIGS. 3 and 6. Note that, in the following, for explaining the functional configurations of the transmission terminal 10, relationships among main components for implementing the functional configurations of the transmission terminal 10 and the components that are shown in FIG. 3 are also explained.

The transceiver 11 of the transmission terminal 10 that is shown in FIG. 6 can be implemented by one or more instructions from the CPU 101 that is shown in FIG. 3, and the network I/F 111 that is shown in FIG. 3. The transceiver 11 is for transmitting and receiving various types of data (or information) with another terminal, a device, or a system, through the communication network 2. The transceiver 11 starts receiving state information that indicates states of the transmission terminals 10, as candidates for the destination, from the transmission management system 50, prior to starting a telephone call with a desired destination terminal. Note that this state information can indicate not only information on an operational condition (a condition as to whether it is on-line or off-line) of each of the transmission terminals 10, but also information on a detailed state, such as it is on-line and further it is possible to establish a telephone call, it is on-line but it is busy, or it is on-line but the counter party is away from the seat. Further, the state information can indicate not only information on an operational condition of each of the transmission terminals 10, but also information on various states, such as information indicating that the cable 120c is disconnected from the transmission terminal 10; information indicating that, in the transmission terminal 10, audio data is allowed to be output but image data is disallowed to be output; or information indicating that, in the transmission terminal 10, audio data is disallowed to be output (MUTE), for example. In the following, a case is explained in which the state information indicates an operational condition, as an example.

The reception unit 12 can be implemented by one or more instructions from the CPU 101 that is shown in FIG. 3, the operation button 108 and the power source switch 109 that are shown in FIG. 3. The reception unit 12 is for receiving various types of inputs by a user. For example, upon the power source switch 109 that is shown in FIG. 3 being turned on by a user, the reception unit 12 that is shown in FIG. 6 receives the instruction for turning on the power supply, and the reception unit 12 turns on the power supply.

The communication controller 13 can be implemented by one or more instructions from the CPU 101 that is shown in FIG. 3, and the built-in camera 112 and the image sensor I/F 113 that are shown in FIG. 3. The communication controller 113 is for capturing an image of a subject, and the communication controller 113 is for outputting image data that is obtained by capturing. Additionally, the communication controller 13 can be implemented by one or more instructions from the CPU 101 that is shown in FIG. 3, and the audio input/output I/F 116. After converting voice sound of a user into an audio signal by the microphone 114, the communication controller 13 can input audio data of the audio signal. Furthermore, the communication controller 13 can be implemented by one or more instructions from the CPU 101 that is shown in FIG. 3, and the audio input/output I/F 116 that is shown in FIG. 3. The communication controller 13 can output the audio data of the audio signal to the speaker 115, and the communication controller 13 can cause the speaker 115 to output sound.

The display controller 17 can be implemented by one or more instructions from the CPU 101 that is shown in FIG. 3, and the display I/F 117 that is shown in FIG. 3. The display controller 17 can execute control for combining received image data items having different resolutions, and for transmitting the combined image data items to the display 120. The display controller 17 can transmit information on a destination list that is received from the transmission management system 50 to the display 120, and the display controller 17 can cause the display 120 to display the destination list. Additionally, the display controller 17 can attach additional display data, as a message or a destination name, that is described below to image data.

The storing and reading processing unit 19 can be implemented by one or more instructions from the CPU 101 that is shown in FIG. 3, and the SSD 105 that is shown in FIG. 3. Alternatively, the storing and reading processing unit 19 may be implemented by one or more instruction from the CPU 101. The storing and reading processing unit 19 can execute a process for storing various types of data in the storage unit 1000 or in the recording medium 1010, and the storing and reading processing unit 19 can execute a process for reading out various types of data that are stored in the storage unit 1000 or in the recording medium 1010. The storage unit 1000 can store a terminal ID (identification), a password, and so forth for identifying the transmission terminal 10. Additionally, each time image data and/or audio data is received during a telephone call with a destination terminal, the received image data and/or the audio data is overwritten and stored in the storage unit 1000. Among these, an image is displayed on the display 120 in accordance with the image data prior to overwriting, and sound is output from the speaker 150 in accordance with the audio data prior to overwriting.

Note that the terminal ID according to the embodiment indicates an example of identification information, such as a language, a character, a mark, or various types of symbols, that is used for uniquely identifying the transmission terminal 10. Additionally or alternatively, the terminal ID may be identification information that is obtained by combining at least two of the above-described language, the character, the mark, or the various types of symbols. Further, instead of the terminal ID, a user ID for identifying a user of the terminal 10 may be used. In this case, the terminal identification information may include not only the terminal ID, but also the user ID.

### <Functional configuration of the relay device 30>

The relay device 30 includes a transceiver 31 that can serve as a transfer unit; a determining unit 32; and a storing and reading processing unit 39. These units are functions or functional units that are implemented by operating some components that are shown in FIG. 4 in response to one or more instructions from the CPU 201 that are in accordance with the relay program that is from the HD 204 and that is loaded on the RAM 203. Additionally, the relay device 30 includes a storage unit 3000 that is formed of the RAM 203 that is shown in FIG. 4 and/or the HD 204 that is shown in FIG. 6.

### (Functional configurations of the relay device 30)

Next, functional configurations of the relay device 30 are explained in detail. Note that, in the following, for explaining the functional configurations of the relay device 30, relationships among main components for implementing the functional configurations of the relay device 30 and the components that are shown in FIG. 4 are also explained.

The transceiver 31 of the relay device 30 that is shown in FIG. 6 can be implemented by one or more instructions from the CPU 201 that is shown in FIG. 4, and the network I/F 209 that is shown in FIG. 6. The transceiver 31 is for transmitting and receiving various types of data (or information) with another terminal, a device, or a system, through the communication network 2. Additionally, the transceiver 31 can function as a transfer unit, and the transceiver 31 can transfer image data and/or audio data that is transmitted from a first transmission terminal to a second transmission terminal.

The determining unit 32 is for determining whether an image is a black image or a normal image based on a data amount of content data of that is transmitted from the transmission terminal 10. The black image is an image such that the whole of the image is colored in black. The black image does not show a current subject at the destination. For the black image data, an amount of data is smaller than that of image data that shows a subject. Note that the black image may not be colored in black, provided that the black image does not show a subject. For example, the black image may be colored in white, or the black image may be colored in a color other than black (e.g., red or blue). Alternatively, a predetermined specific fixed shape may be shown.

The storing and reading processing unit 39 can be implemented by one or more instructions from the CPU 201 that is shown in FIG. 4, and the HDD 205 that is shown in FIG. 4. The storing and reading processing unit 30 can execute a process for storing various types of data in the storage unit 3000, and can execute a process for reading out various types of data that are stored in the storage unit 3000.

### <Functional configuration of transmission management system 50>

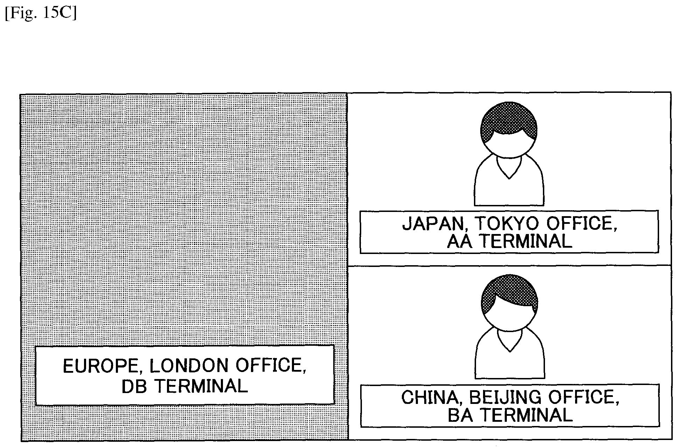

The transmission management system 50 includes a transceiver 51; a determining unit 52; and a storing and reading processing unit 59. These units are functions or functional units that are implemented by operating some components that are shown in FIG. 6 in response to one or more instructions from the CPU 201 that are in accordance with the transmission management program that is from the HD 204 and that is loaded on the RAM 203. Further, the transmission management system 50 includes a storage unit 5000 that is formed of the HD 204 that is shown in FIG. 4. Data of the messages that are shown in FIG. 15C is stored in the storage unit 5000.

### (Authentication management table)

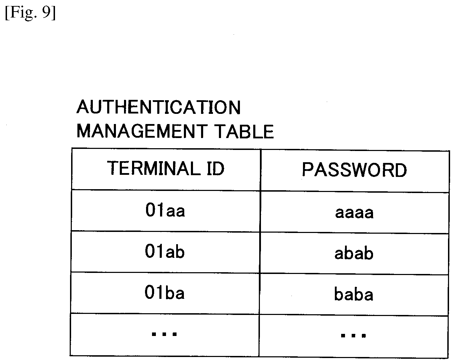

An authentication management DB 5001 is formed in the storage unit 5000. The authentication management DB 5001 is formed of an authentication management table such as shown in FIG. 9. In the authentication table, for each of the terminal IDs of the transmission terminals 10 that are managed by the transmission management system 50, a corresponding password is associated and maintained. For example, in the authentication table that is shown in FIG. 9, it is shown that the terminal ID of the transmission terminal 10aa is "01aa," and that the password is "aaaa."

### (Terminal management table)

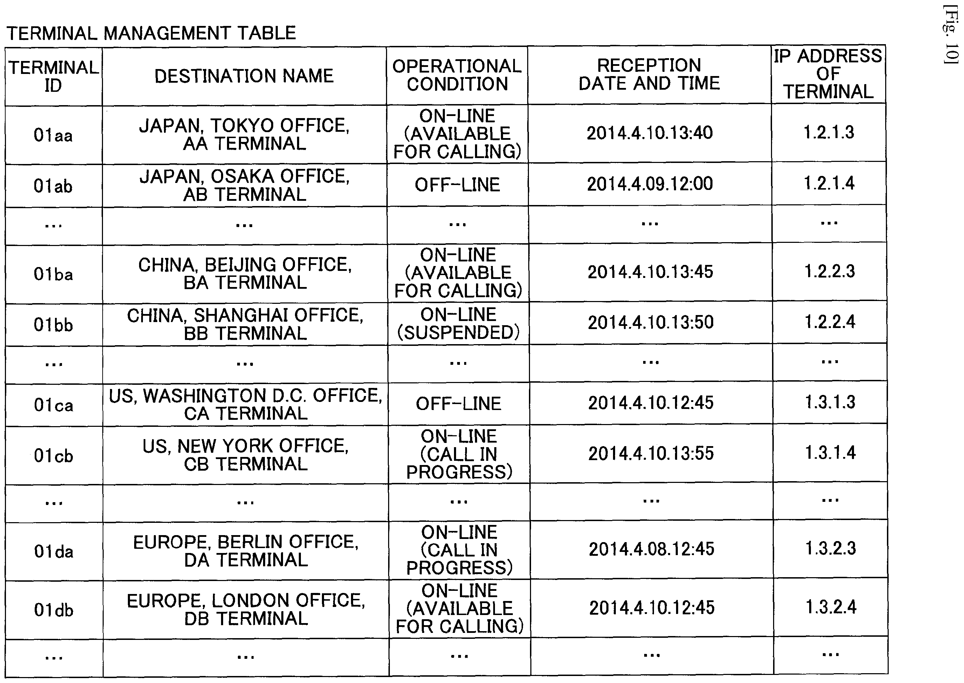

Further, a terminal management DB 5002 is formed in the storage unit 5000. The terminal management DB 5002 is formed of a terminal management table such as shown in FIG. 10. In the terminal management table, for each of the terminal IDs of the transmission terminals 10, a destination name for a case in which the corresponding transmission terminal 10 is the destination; an operational condition of the corresponding transmission terminal 10; date and time of receiving log-in request information (which is described below) by the transmission management system 50; and the IP address of the corresponding transmission terminal 10 are associated and maintained. For example, in the terminal management table that is shown in FIG. 10, it is indicated that, for the terminal 10aa having the terminal ID of "01aa," the destination name is "Japan, Tokyo office, AA terminal," the operational condition is "on-line (available for calling)," the date and time of receiving the log-in request information by the transmission management system 50 is "April 10, 2014, 13:40," and the IP address of the terminal 10aa is "1.2.1.3."

### (Destination list management table)

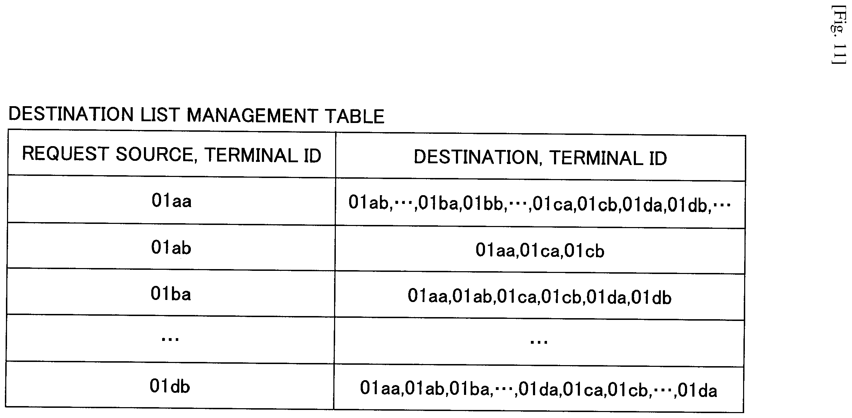

A destination list management DB 5003 is formed in the storage unit 5000. The destination list management DB 5003 is formed of a destination list management table such as shown in FIG. 11. In the destination list management table, for each of the terminal IDs of the request source terminals that request to start calling, all the terminal IDs of the destination terminals that are stored as candidates for the destination terminal are associated and maintained. For example, in the destination list management table that is shown in FIG. 11, it is shown that the candidates of the destination terminal (the terminal 10db) to which a request to start calling can be transmitted from the request source terminal (the terminal 10aa) having the terminal ID of "01aa" are the terminal 10ab having the terminal ID of "01ab," the terminal 10ba having the terminal ID of "01ba," the terminal 10bb having the terminal ID of "01bb," and so forth. The candidates for the destination terminal can be updated by adding or deleting some candidates in response to a request to add or delete from a request source terminal to the management system 50.

### <<Process or operation of the embodiment>>

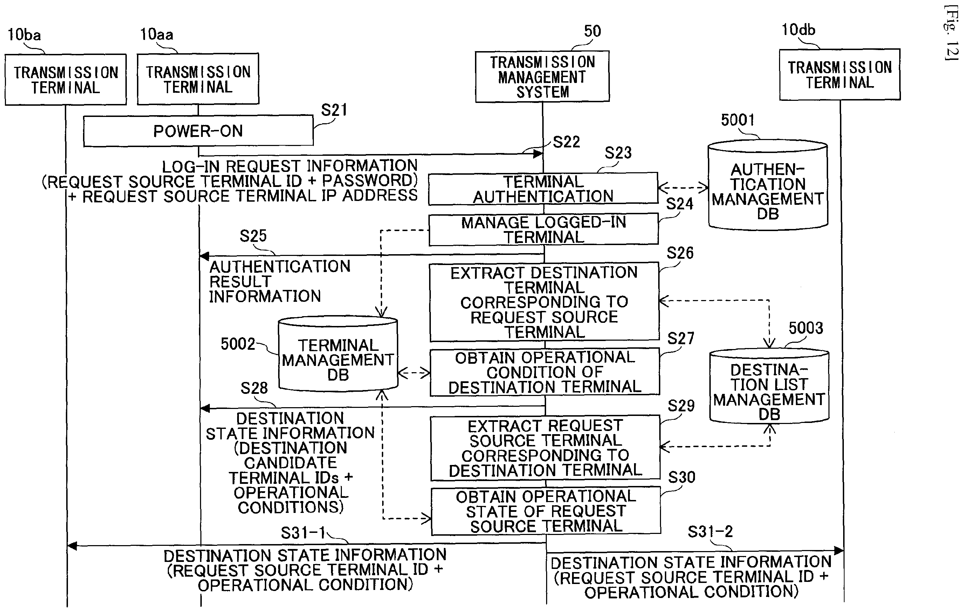

Next, there is explained a processing method in the transmission system according to the embodiment by referring to FIGS. 12 to 15. Here, an example of a screen is explained that is displayed at the side of the transmission terminal 10aa, in response to selecting, by the transmission terminal 10db, screen mute, during calling between the transmission terminal 10aa and the transmission terminal 10db.

First, there is explained a process for logging in by the transmission terminal 10aa by referring to FIG. 12. FIG. 12 is a sequence diagram showing a process for logging in by a transmission terminal. Note that, in FIG. 12, all of the various types of administrative information are transmitted and received by using the session "sei" for administrative information that is shown in FIG. 1.

First, upon the power source switch 109 that is shown in FIG. 3 being turned on by a user of the request source terminal (the terminal 10aa), the reception unit 12 that is shown in FIG. 6 receives the instruction for power-on, and the reception unit 12 turns on the power supply (step S21). Then, in response to receiving the above-described instruction for power-on, the transceiver 11 automatically transmits log-in request information that indicates a request to log in to the transmission management system 50 through the communication network 2 (step S22). Note that the log-in request information may be transmitted in accordance with an operation of the operation button 108 by the user, instead of being transmitted in response to the power-on of the power source switch 109. Further, the log-in request information includes the terminal ID and the password for identifying the transmission terminal 10aa itself as a request source. The terminal ID and the password are data that is read out from the storage unit 1000 through the storing and reading processing unit 19, and that is transmitted to the transceiver 11. Note that the terminal ID and the password may be stored in the recording medium 1010, and may be read out from the recording medium 1010. Further, during transmission of the log-in request information from the transmission terminal 10aa to the transmission management system 50, the transmission management system 50 that is a receiving side can obtain an IP address of the transmission terminal 10aa that is a transmitting side.

Next, the storing and reading processing unit 59 of the transmission management system 50 searches the authentication management table (cf. FIG. 9) for the terminal ID and the password by using, as a search key, the terminal ID and the password that is included in the log-in request information that is received through the transceiver 51. The determining unit 51 executes terminal authentication by determining whether the same terminal ID and the same password are maintained in the authentication management table (step S23). In response to determining that the log-in request is from a transmission terminal 10 having a valid usage right as a result of the terminal authentication that the same terminal ID and the same password are maintained, the storing and reading processing unit 59 associates the terminal ID of the transmission terminal 10aa, the operational condition, the data and time of receiving the log-in request information, and the IP address of the transmission terminal 10aa, and stores these associated items in the terminal management table (cf. FIG. 10) (step S24). By doing this, the terminal ID of "01aa," the operational state of "on-line (available for calling)," the date and time of reception "2014.4.10.13:40," and the IP address "1.2.1.3" of the terminal 10aa are to be associated and maintained in the terminal management table that is shown in FIG. 10.

Then, the transceiver 51 of the transmission management system 50 transmits, through the communication network 2, authentication result information that indicates a result of the above-described terminal authentication to the request source terminal (the terminal 10aa) that transmits the above-described log-in request (step S25). In the embodiment, the explanation is continued below for a case in which a determination is made that the request source terminal is a terminal having a valid usage right.

The storing and reading processing unit 59 of the transmission management system 50 searches the destination list management table (cf. FIG. 11) for terminal IDs of candidates for the destination terminal by using, as a search key, the terminal ID of "01aa" of the request source terminal (the transmission terminal 10aa) that transmits the log-in request. Then, the storing and reading processing unit 59 extracts the candidates for the destination terminal that can communicate with the request source terminal (the transmission terminal 10aa) by reading out the terminal IDs of the candidates for the destination terminal (step S26). Here, for simplicity of the explanation, a case is explained in which there are three transmission terminals (10ab, 10ba, and 10db) as candidates for the destination terminal of the request source terminal (the terminal 10aa).

Next, the storing and reading processing unit 59 searches the terminal management table (cf. FIG. 10) for the operational conditions by using, as a search key, the above-described extracted terminal IDs ("01ab," "01ba," and "01db") of the candidates for the destination terminal. Then, the storing and reading processing unit 59 obtains the operational conditions of the transmission terminals (10ab, 10ba, and 10db) by reading out, for the above-described extracted terminal IDs, the corresponding operational conditions ("off-line," "on-line," and "on-line") (step S27).

Next, the transceiver 51 transmits, through the network 2, destination state information that includes the terminal IDs ("01ab," "01ba," and "01db") that are used as the search key at above-described step S27, and the operational states ("off-line," "on-line (available for calling)," and "on-line (available for calling)") of the corresponding destination terminals (the transmission terminals 10ab, 10ba, and 10db) to the request source terminal (the terminal 10aa) (step S28). In this manner, the request source terminal (the terminal 10aa) can obtain the current operational conditions ("off-line," "on-line (available for calling)," and "on-line (available for calling)") of the corresponding transmission terminals (10ab, 10ba, and 10db) that are the candidates for the destination terminal that can communicate with the request source terminal (the transmission terminal 10aa).

Further, the storing and reading processing unit 59 of the transmission management system 50 searches the destination list management table (cf. FIG. 11) for a terminal ID of another request source terminal by using, as a search key, the terminal ID of "01aa" of the request source terminal (the terminal 10aa) that transmits the log-in request. Then, the storing and reading processing unit 59 extracts the terminal ID of the other request source terminal for which the terminal ID of "01aa" of the above-described request source terminal (the transmission terminal 10aa) is stored as a terminal ID of a candidate for the destination terminal (step S29). Here, the extracted terminal IDs of the other terminals can be "01ab," "01ba," and "01db" in the destination list management table.

Next, the storing and reading processing unit 59 of the transmission management system 50 searches for the terminal management table (FIG. 10) for the operational state by using, as a search key, the terminal ID of "01aa" of the request source terminal (the transmission terminal 10aa) that transmits the log-in request. Then, the storing and reading processing unit 59 obtains the operational condition of the request source terminal (the transmission terminal 10aa) that transmits the log-in request (step S30).

Then, the transceiver 51 transmits the destination state information to the terminals (10ba, and 10db) for which the operational conditions are "on-line" in the terminal management table (cf. FIG. 10), among the transmission terminals (10ab, 10ba, and 10db) corresponding to the terminal IDs ("01ab," "01ba," and "01db") that are extracted at above-described step S29 (step S31-1, 2). Here, the destination state information includes the terminal ID of "01aa" of the request source terminal (the transmission terminal 10aa) that is obtained at above-described step S30, and the operational condition of "on-line." Note that, during transmission of the destination state information from the transceiver 51 to the transmission terminals (10ba, and 10db), the IP addresses of the transmission terminals that are maintained in the terminal management table are referred to, based on the terminal IDs ("01ba," and "01db"). In this manner, the terminal ID of "01aa" of the request source terminal (the terminal 10aa) that transmits the log-in request and the operational state of "on-line" can be transmitted to the other destination terminals (the transmission terminals 10db and 10ba) that can communicate with, as a destination, the request source terminal (the transmission terminal 10aa) that transmits the above-described log-in request.

In a transmission terminal 10 other than the transmission terminal 10aa, upon turning on the power source switch 109 by a user, similar to the above-described step 21, the reception unit 12 receives the instruction for power-on, and processes that are the same as the processes of above-described steps S22 - S31-1, and 2 are to be executed. Thus, the explanations of these steps are omitted.

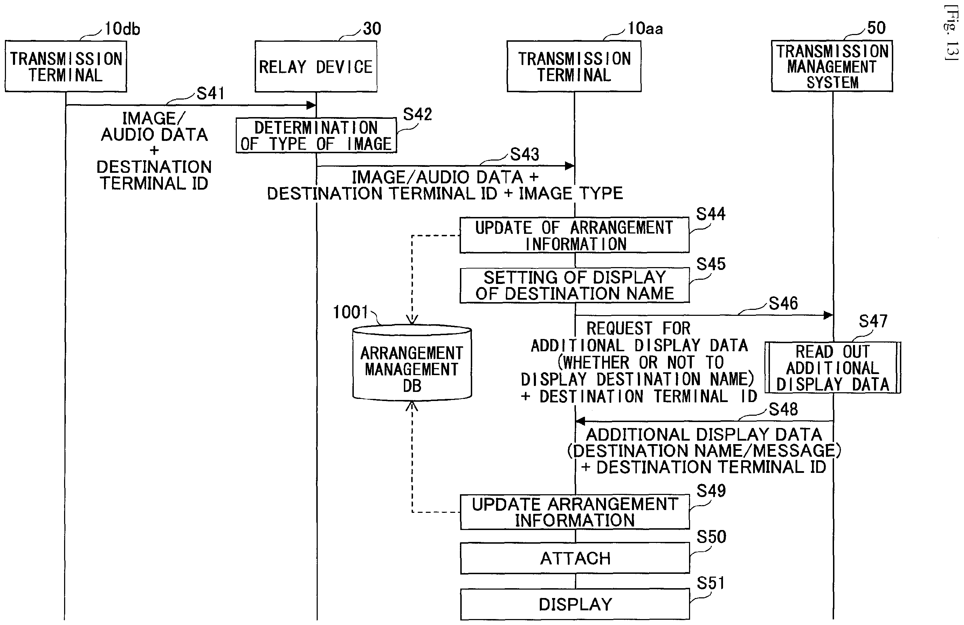

Subsequently, there is explained, by referring to FIG. 13, a process, by the transmission terminal 10aa, of displaying additional display data for a case of calling among three bases of the transmission terminal 10aa, the transmission terminal 10ba, and the transmission terminal 10db. FIG. 13 is a sequence diagram showing a process for displaying the additional display data. Note that, for the case of calling among three bases, image data and audio data that are transmitted from the transmission terminal 10db are received by the transmission terminal 10aa and the transmission terminal 10ba, which are the destinations, through the relay device 30. However, for simplicity of the explanation, FIG. 13 shows a process such that the image data and the audio data that are transmitted from the transmission terminal 10db are received by the transmission terminal 10aa, which is the destination, through the relay device 30.

First, the transceiver 11 of the destination terminal (the transmission terminal 10db) transmits image data, audio data, and the terminal ID of the transmission terminal 10db to the relay device 30 (step S41). In this manner, the transceiver 51 of the relay device 30 receives the image data, the audio data, and the terminal ID of the transmission terminal 10db.

Next, the determining unit 32 of the relay device 30 determines whether the image that is received at above-described step S41 is a black image or a normal image, based on a data amount of the image data that is received at above-described step S41 (step S42). During muting of an image by the destination terminal (the transmission terminal 10db), the destination terminal (the transmission terminal 10db) transmits black image data that does not represent a subject. Since the data amount of the black image data is smaller than that of normal image data that represents a subject, the determining unit 32 can determine whether received image data is black image data or normal image data, based on the data amount.

Next, the transceiver 31 of the relay device 30 transmits, in addition to the image data, the audio data, and the terminal ID of the transmission terminal 10db that are received at above-described step S41, image type information (step S43). The image type information includes a result of the determination at above-described step S42. The image type information indicates whether the received image is the black image or the normal image. In this manner, the transceiver 11 of the request source terminal (the transmission terminal 10aa) can receive the image data, the audio data, the terminal ID of the transmission terminal 10db, and the image type information.

Next, in response to detecting that a transmission terminal 10 that participates in the conference is changed, in the request source terminal (the transmission terminal 10aa), the storing and reading processing unit 39 updates the arrangement management table (step S44). For example, for a case of the screen that is divided into two pieces, such as shown in FIG. 7B, in response to detecting that one transmission terminal 10 that is to participate in the conference is added, the screen is switched to a screen that is divided into three pieces, such as shown in FIG. 8B. At this time, the state of the arrangement management table is switched from the state that is shown in FIG. 7A to the state that is shown in FIG. 8B.

Next, in the request source terminal (the transmission terminal 10aa), the reception unit 12 receives a setting of whether a destination name is to be displayed or a destination name is not to be displayed (a predetermined message is to be displayed), through an operation of the operation button 108 by the user C1 (step S45). Note that this setting can be made at any timing, provided that the timing is after the process of above-described step S21 until the process of step S45.

Next, the transceiver 11 of the request source terminal (the transmission terminal 10aa) transmits a request for the additional display data and the terminal ID of the destination terminal (the transmission terminal 10db) to the transmission management system 50 (step S46). In this manner, the transceiver 51 of the transmission management system 50 can receive the request for the additional display data and the terminal ID of the destination terminal (the transmission terminal 10db). The request for the additional display data includes information on whether or not to display the destination name that indicates whether the destination name is to be displayed or not to be displayed. Note that, for a case in which the destination name is not to be displayed, a message that is described below is to be displayed.

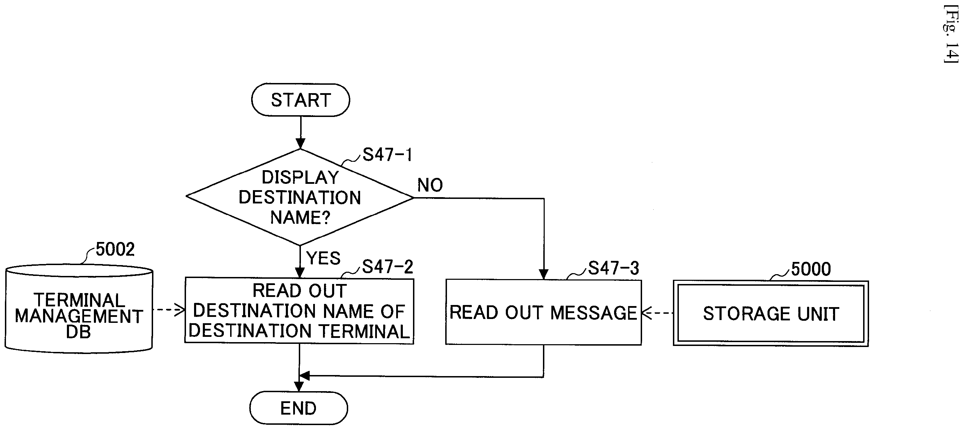

Next, the transmission management system 50 executes a process of reading out the additional display data (the destination name or a message) (step S47). Here, the process of reading out the additional display data is explained by referring to FIG. 14. FIG. 14 is a flowchart showing the process of reading out the additional display data.

As shown in FIG. 14, the determining unit 51 of the transmission management system 50 determines whether to display the destination name, based on the information on whether or not to display the destination name (step S47-1). At step S47-1, for a case in which a determination is made to display the destination name (YES), the storing and reading processing unit 39 searches the terminal management table (cf. FIG. 10) for the destination name by using, as a search key, the terminal ID of the destination terminal (the transmission terminal 10db) that is received at the process of above-described step S46. Then, the storing and reading processing unit 39 reads out the corresponding destination name (step S47-2). At above-described step S47-1, for a case in which a determination is made not to display the destination name (NO), the storing and reading processing unit 39 reads out a message that indicates a predetermined message from the storage unit 5000 (step S47-3).

Next, referring to FIG. 13, the transceiver 51 of the transmission management system 50 transmits the additional display data and the terminal ID of the destination terminal (the transmission terminal 10db) to the request source terminal (the transmission terminal 10aa) (step S48). In this manner, the transceiver 51 of the request source terminal (the transmission terminal 10aa) can receive the additional display data and the terminal ID of the destination terminal (the transmission terminal 10db). For a case in which the process of above-described step S47-2 is executed, the additional display data indicates the "destination name." For a case in which the process of above-described step S47-3 is executed, the additional display data indicates the "message."

Next, in the request source terminal (the transmission terminal 10aa), the storing and reading processing unit 19 updates arrangement information in the arrangement management table (cf. FIG. 8A) (step S49). For example, for a case in which the transmission terminal 10db is the only one destination terminal, the terminal ID of the destination terminal (the transmission terminal 10db) that is transmitted from the transmission management system 50 by the process of above-described step S48, and the destination name, for a case in which the destination name is transmitted as the additional display data, are to be maintained in the portion of the terminal ID of the destination terminal and in the portion of the destination name in the record of the area 2 in FIG. 7A, respectively.

Next, the display controller 17 of the request source terminal (the transmission terminal 10aa) attaches the additional display data to the image data that is transmitted from the destination terminal (the transmission terminal 10db) through the relay device 30 by the processes of above-described steps S41 - 43 (step S50). Then, the display controller 17 causes the display 120 to display the image to which the additional display data is attached.

Note that, in the embodiment, the relay device 30 determines the type of the image based on the data amount of the image data at above-described step S42. However, the embodiment is not limited to this. For example, the request source terminal (the transmission terminal 10aa) may determine the type of the image based on the data amount of the image data. In this case, the relay device 30 may not transmit the image type information at above-described step S43.

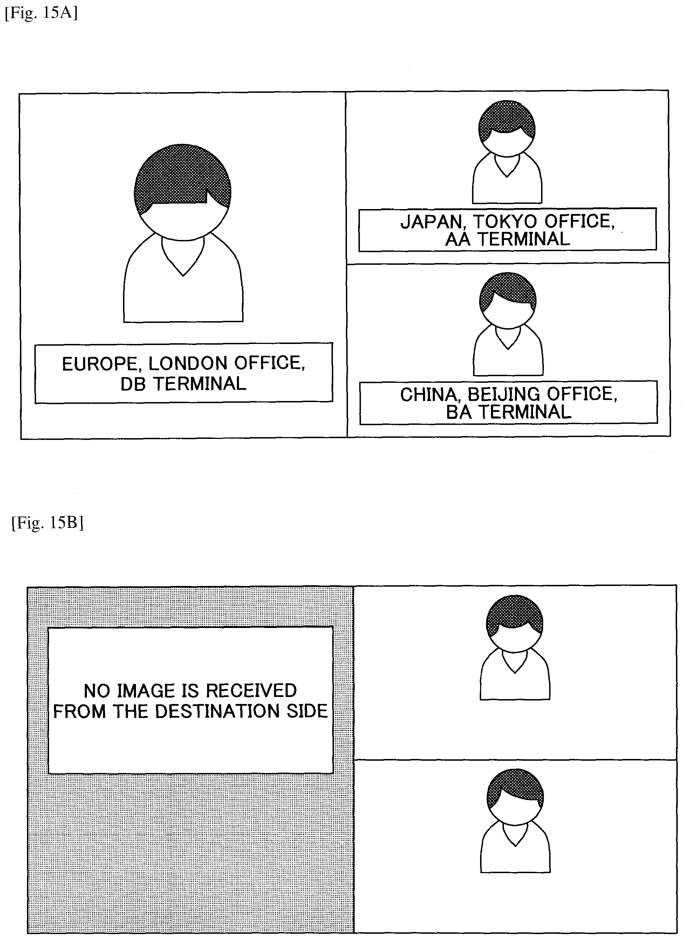

FIGS. 15A, 15B, and 15C are diagrams showing examples of the screen of the transmission terminal 10aa. As shown in FIG. 15A, for a case in which an image is not blocked (not muted) at the side of the destination terminal (the transmission terminal 10db), an image at the side of the destination terminal (the transmission terminal 10db) is displayed at the left side of the screen, and an image at the side of the request source terminal (the transmission terminal 10aa), which is the own terminal, is displayed at the right side of the screen. The destination name is displayed at a lower portion of each image. This is the normal display.

Further, for a case in which an image is blocked (muted) at the side of the destination terminal (the transmission terminal 10db), and in which a setting is made, at above-described step S45, such that the destination name is to be displayed, the black image is displayed at the left side of the screen, and the image at the side of the request source terminal (the transmission terminal 10aa), which is the own terminal, is displayed at the right side of the screen, as shown in FIG. 15C. In this case, the destination name is displayed at a lower portion of each image.

Further, for a case in which an image is blocked (muted) at the side of the destination terminal (the transmission terminal 10db), and in which a setting is made, at above-described step S45, such that the destination name is not to be displayed, the black image is displayed at the left side of the screen, and the image at the side of the request source terminal (the transmission terminal 10aa), which is the own terminal, is displayed at the right side of the screen, as shown in FIG. 15B. Then, the destination name is not displayed in the left side of the screen. In the left side of the screen, a message, "no image is received from the destination side," is displayed. In the right side of the screen, the destination name is not displayed at a lower portion of each image. Note that, in the left side of the screen, the message and the destination name may be simultaneously displayed. Additionally, in the right side of the screen, the destination name may be displayed at the lower portion of each image.

### <<Main effects of the embodiment>>

As described above, according to the embodiment, additional display data, as a destination name of a transmission terminal at a destination side or a predetermined message, is attached to black image data that is transmitted from the transmission terminal at the destination side through the relay device, and the black image data to which the additional display data is attached is displayed. Consequently, even if an image at the destination side (e.g., appearance of the communication partner) becomes invisible, a user (own self) can understand whether the communication partner terminates the telephone call or the communication partner does not terminate the telephone call but is temporarily holding the telephone call.

The relay device 30 and the transmission management system 50 according to the above-described embodiment may be implemented by a single computer. Alternatively, the relay device 30 and the transmission management system 50 according to the above-described embodiment may be divided in a plurality of components (functions or units), and the relay device 30 and the transmission management system 50 may be implemented by a plurality of computers. In this case, each of the computers may implement some components among the components.

Recording media, such as CD-ROMs, that store the transmission program that is to be executed by the transmission terminal 10, the relay program that is to be executed by the relay device 30, and the transmission management program that is to be executed by the transmission management system 50 according to the above-described embodiment, respectively, can be provided domestically or internationally as program products.

In the above-described embodiment, as an example of the transmission terminal, a case is explained in which the transmission terminal is a video conference terminal of a video conference system. However, the embodiment is not limited to this. For example, the transmission terminal may be
a telephone terminal of a telephone system, such as an Internet Protocol (IP) telephone terminal of an IP telephone system. Additionally or alternatively, the transmission terminal may be a smartphone, a cellular phone, a car navigation terminal, a wearable computer, a monitoring camera, an electronic whiteboard, a projector, a game device, or an industrial apparatus having a communication function. Examples of the wearable computer include a wrist watch; a head-mounted display; and so forth. Examples of the industrial apparatus include an office machine, such as a multifunction peripheral/printer/product (MFP); a medical instrument, such as an endoscope; an agricultural machine, such as a cultivator; and so forth.

Further, in the above-described embodiment, the image data and the audio data are explained as an example of content data. However, the embodiment is not limited to this. For example, the content data may be tactile data. In this case, feeling of touching by a user at one terminal side is transmitted to a side of another terminal. Alternatively or additionally, the content data may be olfaction data. In this case, a smell (a scent) at one terminal side is transmitted to a side of another terminal. Alternatively or additionally, the content data may be at least one of image data, audio data, tactile data, and olfaction data.

In the above-described embodiment, a case is explained in which a video conference is conducted by using the transmission system 1. However, the embodiment is not limited to this. For example, the transmission system 1 may be used for a briefing session, a casual conversation among family members or friends, or unidirectional indication of information.

The transmission terminal, the transmission method, and the non-transitory storage medium storing the program are explained above by the embodiments. However, the present invention is not limited to the embodiments, and various modifications and improvements may be made within the scope of the present invention. Specific examples of numerical values are used in order to facilitate understanding of the invention. However, these numerical values are simply illustrative, and any other appropriate values may be used, except as indicated otherwise. The separations of the items in the above-described explanation are not essential to the present invention. Depending on necessity, subject matter described in two or more items may be combined and used, and subject matter described in an item may be applied to subject matter described in another item (provided that they do not contradict). A boundary of a functional unit or a processing unit in a functional block does not necessarily correspond to a boundary of a physical component. An operation by a plurality of functional units may be physically executed by a single component. Alternatively, an operation by a single functional unit may be physically executed by a plurality of components. For the convenience of explanation, the devices according to the embodiment of the present invention are explained by using the functional block diagrams. However, these devices may be implemented in hardware, software, or combinations thereof. The software that operates in accordance with the present invention may be prepared in any appropriate storage medium, such as a random access memory (RAM), a flash memory, a read-only memory (ROM), an EPROM, an EEPROM, a register, a hard disk drive (HDD), a removable disk, a CD-ROM, a database, a server, and the like.

The present invention can be implemented in any convenient form, for example using dedicated hardware, or a mixture of dedicated hardware and software. The present invention may be implemented as computer software implemented by one or more network processing apparatuses. The network can comprise any conventional terrestrial or wireless communications network, such as the Internet. The processing apparatuses can compromise any suitable programmed apparatuses such as a general-purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any storage medium for storing processor readable code such as a floppy disk, a hard disk, a CD ROM, a magnetic tape device or a solid state memory device. The hardware platform includes any desired hardware resources including, for example, a central processing unit (CPU), a random access memory (RAM), and a hard disk drive (HDD). The CPU may include processors of any desired kinds and numbers. The RAM may include any desired volatile or non-volatile memories. The HDD may include any desired nonvolatile memories capable of recording a large amount of data. The hardware resources may further include an input device, an output device, and a network device in accordance with the type of the apparatus. The HDD may be provided external to the apparatus as long as the HDD is accessible from the apparatus. In this case, the CPU, for example, the cache memory of the CPU, and the RAM may operate as a physical memory or a primary memory of the apparatus, while the HDD may operate as a secondary memory of the apparatus.

The present application is based on and claims the benefit of priority of Japanese Patent Application No. 2014-174766 filed on August 29, 2014.

### Reference Signs List

- 1:: TRANSMISSION SYSTEM
- 10:: TRANSMISSION TERMINAL
- 11:: TRANSCEIVER
- 12:: RECEPTION UNIT
- 13:: COMMUNICATION CONTROLLER
- 17:: DISPLAY CONTROLLER
- 19:: STORING AND READING PROCESSING UNIT
- 30:: RELAY DEVICE
- 50:: TRANSMISSION MANAGEMENT SYSTEM
- 51:: TRANSCEIVER
- 52:: DETERMINING UNIT
- 1000:: STORAGE UNIT
- 1001:: ARRANGEMENT MANAGEMENT DB
- 3000:: STORAGE UNIT
- 5000:: STORAGE UNIT
- 5001:: AUTHENTICATION MANAGEMENT DB
- 5002:: TERMINAL MANAGEMENT DB
- 5003:: DESTINATION LIST MANAGEMENT DB

### Citation List

### Patent Literature

[PTL 1] Patent Document 1: PCT Japanese Translation Patent Publication No. 2010-506461
[PTL 2] Patent Document 2: Japanese Unexamined Patent Publication No. 2004-32305

## Claims

1. A transmission terminal (10) that is configured for executing communication with another transmission terminal (10) at a destination side by communicating with a relay device (30) configured for relaying image data that is communicated among a plurality of the transmission terminals (10), and configured for communicating with a transmission management system (50) for managing the transmission terminals (10), the transmission terminal (10) comprising:
a transmitter (11) configured to transmit, to the transmission management system (50), a request for additional display data, as a destination name of the other transmission terminal (10) or a predetermined message;
a receiver (11) configured to receive the additional display data that is transmitted from the transmission management system (50) in response to the transmission of said request by the transmitter (11); and
a display control unit (17) configured to attach the received additional display data to data of an image that is transmitted from the other transmission terminal (10) at the destination side through the relay device (30) and that does not show a subject at the destination side, wherein the display control unit (17) causes a display unit (120) to display the data of the image to which the received additional display data is attached;
**characterized by**:
a reception unit (12) configured to receive a setting that the destination name is to be displayed or a setting that the predetermined message is to be displayed,
wherein the transmitter (11) is further configured to transmit, in the request for the additional display data to the transmission management system (50), information on whether or not to display the destination name and in a case in which the destination name is not to be displayed the predetermined message received by the reception unit (12) is selected to be displayed.

2. The transmission terminal (10) according to claim 1,
wherein, in response to receiving, by the reception unit (12), the setting that the destination name is to be displayed, the transmitter (11) is configured to transmit the request for the additional display data, as the destination name of the other transmission terminal (10), to the transmission management system (50).

3. The transmission terminal (10) according to claim 1,
wherein, in response to receiving, by the reception unit (12), the setting that the predetermined message is to be displayed, the transmitter (11) is configured to transmit the request for the additional display data, as the predetermined message, to the transmission management system (50).

4. The transmission terminal (10) according to any one of claims 1 to 3, wherein the image that does not show the subject at the destination side is a black image.

5. A transmission method that is to be executed by a transmission terminal (10) that is configured for executing communication with another transmission terminal (10) at a destination side by communicating with a relay device (30) configured for relaying image data that is communicated among a plurality of the transmission terminals (10), and configured for communicating with a transmission management system (50) for managing the transmission terminals (10), the transmission method comprising:
a transmission step of transmitting, to the transmission management system (50), a request for additional display data, as a destination name of the other transmission terminal (10) or a predetermined message;
a reception step of receiving the additional display data that is transmitted from the transmission management system (50) in response to the transmission of said request by the transmission step; and
a display control step of attaching the received additional display data to data of an image that is transmitted from the other transmission terminal (10) at the destination side through the relay device (30) and that does not show a subject at the destination side, wherein the display control step causes a display unit (120) to display the data of the image to which the received additional display data is attached;
**characterized by**:
a receiving step of receiving, by a reception unit (12) a setting that the destination name is to be displayed or a setting that the predetermined message is to be displayed, and
a transmitting step of transmitting in the request for the additional display data to the transmission management system (50), information on whether or not to display the destination name and in a case in which the destination name is not to be displayed the predetermined message received in the receiving step is selected to be displayed.

6. A non-transitory storage medium storing a program to be executed by a computer of a transmission terminal (10) that is configured for executing communication with another transmission terminal (10) at a destination side by communicating with a relay device (30) configured for relaying image data that is communicated among a plurality of the transmission terminals (10), and configured for communicating with a transmission management system (50) for managing the transmission terminals (10), the program causing the computer to execute a transmission method comprising:
a transmission step of transmitting, to the transmission management system (50), a request for additional display data, as a destination name of the other transmission terminal (10) or a predetermined message;
a reception step of receiving the additional display data that is transmitted from the transmission management system (50) in response to the transmission of said request by the transmission step; and
a display control step of attaching the received additional display data to data of an image that is transmitted from the other transmission terminal (10) at the destination side through the relay device (30) and that does not show a subject at the destination side, wherein the display control step causes a display unit (120) to display the data of the image to which the received additional display data is attached;
**characterized by**:
a receiving step of receiving, by a reception unit (12) a setting that the destination name is to be displayed or a setting that the predetermined message is to be displayed, and
a transmitting step of transmitting in the request for the additional display data to the transmission management system (50), information on whether or not to display the destination name and in a case in which the destination name is not to be displayed the predetermined message received in the receiving step is selected to be displayed.

## Patentansprüche

1. Übertragungsendgerät (10), das konfiguriert ist, eine Kommunikation mit einem weiteren Übertragungsendgerät (10) auf einer Zielseite auszuführen, indem mit einer Relaisvorrichtung (30) kommuniziert wird, die konfiguriert ist, Bilddaten, die zwischen mehreren Übertragungsendgeräten (10) kommuniziert werden, weiterzuleiten, und die konfiguriert ist, mit einem Übertragungsmanagementsystem (50) zu kommunizieren, um die Übertragungsendgeräte (10) zu managen, wobei das Übertragungsendgerät (10) Folgendes umfasst:
einen Sender (11), der konfiguriert ist, eine Anforderung zusätzlicher Anzeigedaten als einen Zielnamen des weiteren Übertragungsendgeräts (10) oder eine vorgegebene Nachricht zum Übertragungsmanagementsystem (50) zu senden;
einen Empfänger (11), der konfiguriert ist, die zusätzlichen Anzeigedaten, die vom Übertragungsmanagementsystem (50) als Antwort auf das Senden der Anforderung durch den Sender (11) gesendet wurden, zu empfangen; und
eine Anzeigesteuereinheit (17), die konfiguriert ist, die empfangenen zusätzlichen Anzeigedaten an Daten eines Bildes, das vom weiteren Übertragungsendgerät (10) auf der Zielseite über die Relaisvorrichtung (30) gesendet wurde und das keine Person auf der Zielseite zeigt, anzuhängen, wobei die Anzeigesteuereinheit (17) bewirkt, dass eine Anzeigeeinheit (120) die Daten des Bildes, an die die empfangenen zusätzlichen Anzeigedaten angehängt wurden, anzeigt;
**gekennzeichnet durch**
eine Empfangseinheit (12), die konfiguriert ist, eine Einstellung, dass der Zielname angezeigt werden soll, oder eine Einstellung, dass die vorgegebene Nachricht angezeigt werden soll, zu empfangen, wobei
der Sender (11) ferner konfiguriert ist, in der Anforderung der zusätzlichen Anzeigedaten Informationen darüber, ob der Zielname angezeigt werden soll oder nicht, zum Übertragungsmanagementsystem (50) zu senden, und dann, wenn der Zielname nicht angezeigt werden soll, die vorgegebene Nachricht, die durch die Empfangseinheit (12) empfangen wurde, zu wählen, um angezeigt zu werden.

2. Übertragungsendgerät (10) nach Anspruch 1, wobei
der Sender (11) konfiguriert ist, als Antwort auf das Empfangen durch die Empfangseinheit (12) der Einstellung, dass der Zielname angezeigt werden soll, die Anforderung der zusätzlichen Anzeigedaten als den Zielnamen des weiteren Sendeendgeräts (10) zum Übertragungsmanagementsystem (50) zu senden.

3. Übertragungsendgerät (10) nach Anspruch 1, wobei
der Sender (11) konfiguriert ist, als Antwort auf das Empfangen durch die Empfangseinheit (12) der Einstellung, dass die vorgegebene Nachricht angezeigt werden soll, die Anforderung der zusätzlichen Anzeigedaten als die vorgegebene Nachricht zum Übertragungsmanagementsystem (50) zu senden.

4. Übertragungsendgerät (10) nach einem der Ansprüche 1 bis 3, wobei
das Bild, das keine Person auf der Zielseite zeigt, ein schwarzes Bild ist.

5. Übertragungsverfahren, das durch ein Übertragungsendgerät (10) ausgeführt werden soll, das konfiguriert ist, eine Kommunikation mit einem weiteren Übertragungsendgerät (10) auf einer Zielseite auszuführen, indem mit einer Relaisvorrichtung (30) kommuniziert wird, die konfiguriert ist, Bilddaten, die zwischen mehreren Übertragungsendgeräten (10) kommuniziert werden, weiterzuleiten, und die konfiguriert ist, mit einem Übertragungsmanagementsystem (50) zu kommunizieren, um die Übertragungsendgeräte (10) zu managen, wobei das Übertragungsverfahren Folgendes umfasst:
einen Sendeschritt des Sendens einer Anforderung zusätzlicher Anzeigedaten als einen Zielnamen des weiteren Übertragungsendgeräts (10) oder einer vorgegebenen Nachricht zum Übertragungsmanagementsystem (50);
einen Empfangsschritt des Empfangens der zusätzlichen Anzeigedaten, die vom Übertragungsmanagementsystem (50) als Antwort auf das Senden der Anforderung durch den Sendeschritt gesendet wurden; und
einen Anzeigesteuerungsschritt des Anhängens der empfangenen zusätzlichen Anzeigedaten an Daten eines Bildes, das vom weiteren Übertragungsendgerät (10) auf der Zielseite über die Relaisvorrichtung (30) gesendet wurde und das keine Person auf der Zielseite zeigt, wobei der Anzeigesteuerungsschritt bewirkt, dass eine Anzeigeeinheit (120) die Daten des Bildes, an die die empfangenen zusätzlichen Anzeigedaten angehängt wurden, anzeigt;
**gekennzeichnet durch**
einen Empfangsschritt des Empfangens durch eine Empfangseinheit (12) einer Einstellung, dass der Zielname angezeigt werden soll, oder einer Einstellung, dass die vorgegebene Nachricht angezeigt werden soll, und
einen Sendeschritt des Sendens in der Anforderung der zusätzlichen Anzeigedaten von Informationen darüber, ob der Zielname angezeigt werden soll oder nicht, zum Übertragungsmanagementsystem (50), und dann, wenn der Zielname nicht angezeigt werden soll, des Wählens der vorgegebenen Nachricht, die im Empfangsschritt empfangen wurde, um angezeigt zu werden.

6. Nichttransitorisches Speichermedium, in dem ein Programm gespeichert ist, das durch einen Computer eines Übertragungsendgeräts (10) ausgeführt werden soll, das konfiguriert ist, eine Kommunikation mit einem weiteren Übertragungsendgerät (10) auf einer Zielseite auszuführen, indem mit einer Relaisvorrichtung (30) kommuniziert wird, die konfiguriert ist, Bilddaten, die zwischen mehreren Übertragungsendgeräten (10) kommuniziert werden, weiterzuleiten, und die konfiguriert ist, mit einem Übertragungsmanagementsystem (50) zu kommunizieren, um die Übertragungsendgeräte (10) zu managen, wobei das Programm bewirkt, dass der Computer ein Übertragungsverfahren ausführt, das Folgendes umfasst:
einen Sendeschritt des Sendens einer Anforderung zusätzlicher Anzeigedaten als einen Zielnamen des weiteren Übertragungsendgeräts (10) oder einer vorgegebenen Nachricht zum Übertragungsmanagementsystem (50);
einen Empfangsschritt des Empfangens der zusätzlichen Anzeigedaten, die vom Übertragungsmanagementsystem (50) als Antwort auf das Senden der Anforderung durch den Sendeschritt gesendet wurden; und
einen Anzeigesteuerungsschritt des Anhängens der empfangenen zusätzlichen Anzeigedaten an Daten eines Bildes, das vom weiteren Übertragungsendgerät (10) auf der Zielseite über die Relaisvorrichtung (30) gesendet wurde und das keine Person auf der Zielseite zeigt, wobei der Anzeigesteuerungsschritt bewirkt, dass eine Anzeigeeinheit (120) die Daten des Bildes, an die die empfangenen zusätzlichen Anzeigedaten angehängt wurden, anzeigt;
**gekennzeichnet durch**
einen Empfangsschritt des Empfangens durch eine Empfangseinheit (12) einer Einstellung, dass der Zielname angezeigt werden soll, oder einer Einstellung, dass die vorgegebene Nachricht angezeigt werden soll, und
einen Sendeschritt des Sendens in der Anforderung der zusätzlichen Anzeigedaten von Informationen darüber, ob der Zielname angezeigt werden soll oder nicht, zum Übertragungsmanagementsystem (50), und dann, wenn der Zielname nicht angezeigt werden soll, des Wählens der vorgegebenen Nachricht, die im Empfangsschritt empfangen wurde, um angezeigt zu werden.

## Revendications

1. Terminal de transmission (10) qui est conçu pour effectuer une communication avec un autre terminal de transmission (10) d'un côté destination par communication avec un dispositif de relais (30) conçu pour relayer des données image qui sont communiquées parmi une pluralité des terminaux de transmission (10), et conçu pour communiquer avec un système de gestion de transmission (50) permettant de gérer les terminaux de transmission (10), le terminal de transmission (10) comprenant :
un émetteur (11) conçu pour transmettre, au système de gestion de transmission (50), une demande de données d'affichage supplémentaires, en tant que nom de destination de l'autre terminal de transmission (10) ou un message prédéterminé ;
un récepteur (11) conçu pour recevoir les données d'affichage supplémentaires qui sont transmises depuis le système de gestion de transmission (50) en réponse à la transmission de ladite demande par l'émetteur (11) ; et
une unité de commande d'affichage (17) conçue pour rattacher les données d'affichage supplémentaires reçues à des données d'une image qui est transmise depuis l'autre terminal de transmission (10) du côté destination par le biais du dispositif de relais (30) et qui ne montre pas un sujet du côté destination, l'unité de commande d'affichage (17) amenant une unité d'affichage (120) à afficher les données de l'image à laquelle les données d'affichage supplémentaires reçues sont rattachées ;
**caractérisé par** :
une unité de réception (12) conçue pour recevoir un paramétrage selon lequel le nom de destination doit être affiché ou un paramétrage selon lequel le message prédéterminé doit être affiché,
l'émetteur (11) étant en outre conçu pour transmettre, dans la demande de données d'affichage supplémentaires au système de gestion de transmission (50), des informations sur la nécessité ou non d'afficher le nom de destination et au cas où le nom de destination ne doit pas être affiché, le message prédéterminé reçu par l'unité de réception (12) est choisi pour être affiché.

2. Terminal de transmission (10) selon la revendication 1,
dans lequel, en réponse à la réception, par l'unité de réception (12), du paramétrage selon lequel le nom de destination doit être affiché, l'émetteur (11) est conçu pour transmettre la demande des données d'affichage supplémentaires, en tant que nom de destination de l'autre terminal de transmission (10), au système de gestion de transmission (50).

3. Terminal de transmission (10) selon la revendication 1,
dans lequel, en réponse à la réception, par l'unité de réception (12), du paramétrage selon lequel le message prédéterminé doit être affiché, l'émetteur (11) est conçu pour transmettre la demande des données d'affichage supplémentaires, en tant que message prédéterminé, au système de gestion de transmission (50).

4. Terminal de transmission (10) selon l'une quelconque des revendications 1 à 3,
dans lequel l'image qui ne montre pas le sujet du côté destination est une image noire.

5. Procédé de transmission qui doit être effectué par un terminal de transmission (10) qui est conçu pour effectuer une communication avec un autre terminal de transmission (10) du côté destination par la communication avec un dispositif de relais (30) conçu pour relayer des données image qui sont communiquées parmi une pluralité des terminaux de transmission (10), et conçu pour communiquer avec un système de gestion de transmission (50) permettant de gérer les terminaux de transmission (10), le procédé de transmission (10) comprenant :
une étape de transmission consistant à transmettre, au système de gestion de transmission (50), une demande de données d'affichage supplémentaires, en tant que nom de destination de l'autre terminal de transmission (10) ou un message prédéterminé ;
une étape de réception consistant à recevoir les données d'affichage supplémentaires qui sont transmises depuis le système de gestion de transmission (50) en réponse à la transmission de ladite demande par l'étape de transmission ; et
une étape de commande d'affichage consistant à rattacher les données d'affichage supplémentaires reçues à des données d'une image qui est transmise depuis l'autre terminal de transmission (10) du côté destination par le biais du dispositif de relais (30) et qui ne montre pas un sujet du côté destination, l'étape de commande d'affichage amenant une unité d'affichage (120) à afficher les données de l'image à laquelle les données d'affichage supplémentaires reçues sont rattachées ;
**caractérisé par** :
une unité de réception consistant à recevoir, par une unité de réception (12), un paramétrage selon lequel le nom de destination doit être affiché ou un paramétrage selon lequel le message prédéterminé doit être affiché, et
une étape de transmission consistant à transmettre dans la demande des données d'affichage supplémentaires au système de gestion de transmission (50), des informations sur la nécessité ou non d'afficher le nom de destination et au cas où le nom de destination ne doit pas être affiché, le message prédéterminé reçu dans l'étape de réception est choisi pour être affiché.

6. Support de stockage non transitoire stockant un programme à exécuter par un ordinateur d'un terminal de transmission (10) qui est conçu pour effectuer une communication avec un autre terminal transmission (10) d'un côté destination par la communication avec un dispositif de relais (30) conçu pour relayer des données image qui sont communiquées parmi une pluralité des terminaux de transmission (10), et conçu pour communiquer avec un système de gestion de transmission (50) permettant de gérer les terminaux de transmission (10), le programme amenant l'ordinateur à effectuer un procédé de transmission comprenant :
une étape de transmission consistant à transmettre, au système de gestion de transmission (50), une demande de données d'affichage supplémentaires, en tant que nom de destination de l'autre terminal de transmission (10) ou un message prédéterminé ;
une étape de réception consistant à recevoir les données d'affichage supplémentaires qui sont transmises depuis le système de gestion de transmission (50) en réponse à la transmission de ladite demande par l'étape de transmission ; et
une étape de commande d'affichage consistant à rattacher les données d'affichage supplémentaires reçues à des données d'une image qui est transmise depuis l'autre terminal de transmission (10) du côté destination par le biais du dispositif de relais (30) et qui ne montre pas un sujet du côté destination, l'étape de commande d'affichage amenant une unité d'affichage (120) à afficher les données de l'image à laquelle les données d'affichage supplémentaires reçues sont rattachées ;
**caractérisé par** :
une étape de réception consistant à recevoir, par une unité de réception (12) un paramétrage selon lequel le nom de destination doit être affiché ou un paramétrage selon lequel le message prédéterminé doit être affiché, et
une étape de transmission consistant à transmettre dans la demande des données d'affichage supplémentaires au système de gestion de transmission (50), des informations sur la nécessité ou non d'afficher le nom de destination et au cas où le nom de destination ne doit pas être affiché, le message prédéterminé reçu dans l'étape de réception est choisi pour être affiché.
